# EUROPEAN PATENT APPLICATION

(11) **EP 1 422 607 A1**
(43) Date of publication of application: **26.05.2004**
(21) Application number: 02102613.3
(22) Date of filing: 21.11.2002
(51) Int. Cl.: G06F 3/12

(54) **Method for outputting a digital product definition of a printed product to a layout application**

(71) Applicant: AGFA-GEVAERT, 2640 Mortsel (BE)
(72) Inventor: Leurs, Laurens, 2640 Mortsel (BE)

(57) **Abstract**

A method for making a digital representation of a printed product, the method including (a) creating by a planning application a product definition of the printed product and (b) outputting the product definition by the planning application to a layout application for using the product definition by the layout application for creating an artwork for making the digital representation of the printed product.

## Description

### TERMS

Digital Representation of a Printed Product: the product that is to be printed, represented in digital form.

Artwork: the electronic document that is generated by the Designer, created while taking into account the Product Definition. Also called design, layout or publication.

Designer: person in the creative department who will create an artwork in electronic format based on specific instructions and content.

Product Definition: definition for the final printed product, holding manufacturing specifications. Some specifications that are important for a designer are: page size, bleed size, number of pages, colors used, etc. A product definition often starts from a product intent.

Scripting: a way to automate operations in an application. Could be used to preset and/or lock some attributes in a layout application.

Layout application: software application that is used by the Designer to generate the artwork. Common layout applications are InDesign from Adobe, Xpress from Quark, Illustrator from Adobe, FreeHand from Macromedia.

### Template:

A good example is a Word template. It is a special type of document that is set up with the proper information. When the designer starts to create the artwork, he asks the layout application to create a new document based on this template.

For some applications, the template is limited to one (or two facing) page(s). In this case, the exact number of pages cannot be controlled.

Do not confuse with Imposition templates.

Starting document: similar to the template but it is now already a 'real' document. The application can 'Open' it directly and start working into it.

Template Generator: a software application that creates a template to be used by a layout application, based on certain parameters (of the product definition).

Locked (template or artwork): crucial attributes of a template or document may be locked so that the Designer cannot modify them. E.g. page and bleed size, number of pages, color model, spot colors. Remark: the terms "attributes" and "parameters", e.g. of the product definition, are used as synonyms.

Planning system, also called Planning Application, Project Management System or MIS: a system that creates the product definition. This product definition is to be used both by the creative department, that creates the artwork, and by the pre-press department, that sets up a pre-press workflow for the printed product. Generally, the product definition is also used by the finishing and the printing departments.

Pre-press workflow application: the software application that is used to generate the pre-press product.

### PROBLEM

The designer needs to create the artwork according to the product definition. Later, the pre-press department will set up a workflow system also according to the product definition.

Errors can occur:
- when transferring the instructions from a planning system to the designer;
- when the designer applies the instructions to the artwork;
- when the pre-press department gets instructions in a different way than the designer.

This is especially a problem because the creative department and the pre-press department are really "two different worlds" ("creative" people versus "production" people). Often, the creative and the pre-press departments belong to different companies.

### POSSIBLE SOLUTION

- Make sure that the same product definition is used both by the designer, in the creative department, and by the pre-press department. It is preferred that a central planning system (covering both creative department and pre-press department) is used to define the product BEFORE the creative work is started. In this way, no errors are introduced when transferring the product definition to another department.
- Create the basic document automatically, based on this product definition.
- Preferably lock at least one, more preferably lock all crucial attributes.
- Practical Examples:
- Example 1: Agfa Delano (as the planning application)
   o creates the product definition in JDF format;
   o sends the product definition to Adobe InDesign (as the layout application);
   o sends the product definition to Agfa Apogee (as the pre-press workflow application).
- Example 2: Adobe InDesign
   o creates a new document according to the product definition;
   o locks the attributes to avoid errors.
- Remark: in example 1, "sending" the product definition from Agfa Delano to Adobe InDesign means that Agfa Delano, the planning application, outputs the product definition and that Adobe InDesign, the layout application, inputs it. In this document, "inputting" and "outputting" may be either directly (from the first application to the second one) or indirectly (from the first to the second application via an intermediate application - this is illustrated e.g. by the third example under the heading "Implementation" below).

### IMPLEMENTATION

There are several possible solutions depending on what the layout application supports, ordered here with the most integrated solution first. As mentioned above, preferably a central planning system (covering both creative department and pre-press department) is used; such a planning system is indicated in the drawings below. However, a planning system that creates the product definition and that only sends it to the layout application, not to the pre-press workflow application, may also be used in the embodiments illustrated by the drawings below.
1. Send the product definition (parameters) in a format that the layout application understands. 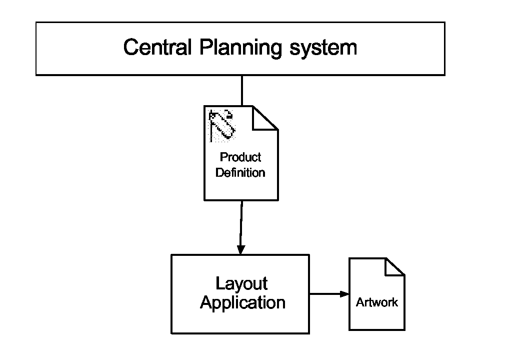
2. Send the product definition (parameters) to a script ("an intermediate script") that drives the layout application to produce the starting document (or template). 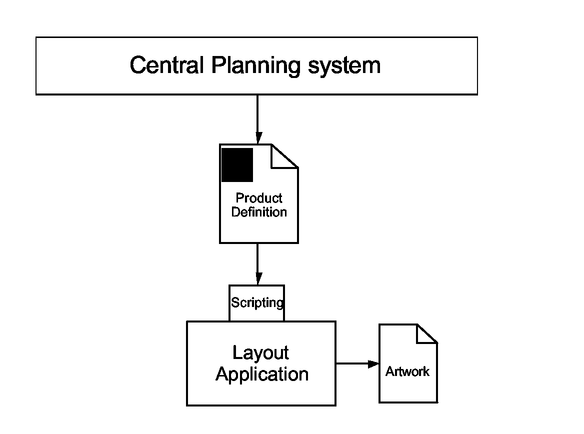
3. Send the product definition (parameters) to an intermediate application that generates the document template or starting document.

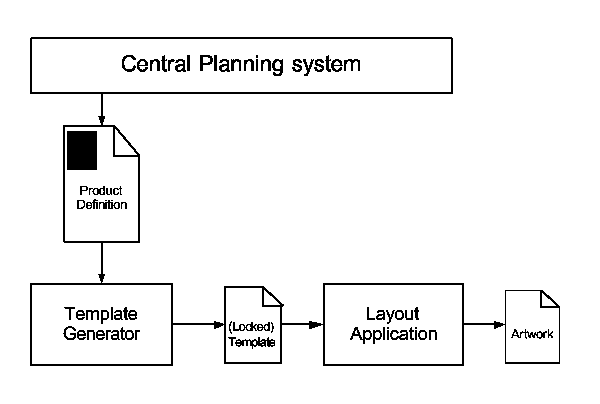

Those skilled in the art will appreciate that numerous modifications and variations may be made to the embodiments disclosed above without departing from the scope of the present invention.

## Claims

1. A method for making a digital representation of a printed product comprising the steps of:
- creating by a planning application a product definition of said printed product;
- outputting said product definition by said planning application to a layout application for using said product definition by said layout application for creating an artwork for making said digital representation of said printed product.

2. The method according to claim 1 further comprising the steps of:
- outputting said product definition by said planning application to a pre-press workflow application for using said product definition by said pre-press workflow application for creating a pre-press product.

3. A method for creating an artwork for making a digital representation of a printed product, the method comprising the steps of:
- inputting a product definition of said printed product by a layout application from a planning application;
- using said product definition for creating said artwork by said layout application.

4. The method according to any one of the preceding claims wherein said product definition comprises a first parameter selected from the group of a page size, a number of pages, a bleed size and a set of colors used.

5. The method according to any one of the preceding claims further comprising the step of:
- locking a second parameter of said product definition for protecting said second parameter from being modified by said layout application.

6. The method according to any one of claims 1 to 5 further comprising the step of:
- creating said product definition in Job Definition Format, i.e. JDF.

7. The method according to any one of claims 1 to 5 further comprising the step of:
- outputting said product definition by said planning application to an intermediate script for driving said layout application.

8. The method according to any one of claims 1 to 5 further comprising the step of:
- outputting said product definition by said planning application to an intermediate application for sending said product definition in a particular format to said layout application.

9. A data processing system comprising means for carrying out the steps of the method according to any one of claims 1 to 8.

10. A computer program comprising computer program code means adapted to perform the method according to any one of claims 1 to 8 when said program is run on a computer.

11. A computer readable medium comprising program code adapted to carry out the method according to any one of claims 1 to 8 when run on a computer.
